Europäisches Patentamt

(19) European Patent Office

Office européen des brevets

(11) **EP 1 593 656 A1**

(12) **EUROPÄISCHE PATENTANMELDUNG**

(43) Veröffentlichungstag:
**09.11.2005 Patentblatt 2005/45**

(51) Int Cl.[7]: **C03B 11/08**, B29C 43/02,
B29D 11/00, G02B 5/18

(21) Anmeldenummer: **05103473.4**

(22) Anmeldetag: **27.04.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **29.04.2004 DE 102004021215**

(71) Anmelder: **Schott AG**
**55122 Mainz (DE)**

(72) Erfinder:
• **Dr. Wölfing, Bernd**
**55124, Mainz (DE)**

• **Pawlowski, Edgar**
**55271, Stadecken-Elsheim (DE)**
• **Dr. Stöhr, Ulrike**
**55127 Mainz (DE)**
• **Dr. Biertümpfel, Ralf**
**55252, Mainz-Kastel (DE)**

(74) Vertreter: **Patentanwälte Kewitz & Kollegen**
**Corneliusstrasse 18**
**60325 Frankfurt am Main (DE)**

(54) **Verfahren und Vorrichtung zum Ausbilden eines optischen Elements**

(57)  Die Erfindung betrifft ein Verfahren und eine Vorrichtung zum Ausbilden eines optischen Elements durch einen Heißformgebungsprozess. Das Verfahren umfasst die folgenden Schritte: Bereitstellen eines Formwerkzeugs (1), auf dessen Oberfläche eine Mehrzahl von Abformbereichen (2; 3; 4) zum Abformen von optischen Strukturen auf ein Substrat (10) ausgebildet sind; Bereitstellen des Substrats (10), wobei auf einer dem Formwerkzeug (1) zugewandten Oberfläche des Substrats (10) zumindest ein vorgeformter Bereich (16; 17) ausgebildet ist; Erwärmen des Substrats (10) auf eine Temperatur oberhalb einer Übergangstemperatur eines Materials des Substrats (10); und Gegeneinanderdrücken des Formwerkzeugs (1) und des Substrats (10), um ein optisches Element (20) mit einer Mehrzahl von optischen Strukturen (21; 23; 25) auszubilden, deren Form durch die Form des jeweils zugeordneten Abformbereichs (2; 3; 4) vorgegeben ist;

Das Verfahren zeichnet sich dadurch aus, dass beim Gegeneinanderdrücken des Formwerkzeugs (1) und des Substrats (10) der jeweilige vorgeformte Bereich (16; 17) des Substrats (10) mit dem zugeordneten Abformbereich (2; 3; 4) oder mit dem Formwerkzeug (1) zunächst in einem zentralen Bereich (11) in Anlage gelangt, sodass sich ein Spalt (6), der zwischen einer Oberfläche des jeweiligen vorgeformten Bereichs (16; 17) und einer Oberfläche des zugeordneten Abformbereichs (2; 3; 4) oder des Formwerkzeugs (1) ausgebildet ist, von dem zentralen Bereich (11) zu einem Rand (2, 14) des jeweiligen vorgeformten Bereichs (16; 17) oder des Substrats (10) hin erstreckt und verbreitert, wobei das Substrat (10) und das Formwerkzeug (1) im Wesentlichen mit identischen Grundflächen bereitgestellt werden.

Weitere Gesichtspunkte der Erfindung betreffen ein Substrat und ein Formwerkzeug für dieses Verfahren.

EP 1 593 656 A1

## Beschreibung

### Gebiet der Erfindung

Die vorliegende Erfindung betrifft allgemein die Herstellung von optischen Elementen mittels Heißformgebung eines optischen Substrats, insbesondere durch Pressen oder Prägen des optischen Substrats. Insbesondere betrifft die vorliegende Erfindung ein Verfahren zum Ausbilden eines optischen Elements mittels Heißformgebung sowie ein Substrat und ein Formwerkzeug für dieses Verfahren.

### Hintergrund der Erfindung

Diffraktive optische Elemente (DOEs), Linsenarrays und refraktive Mikrooptiken entwickeln sich immer mehr zu zentralen Elementen der modernen Optik. Viele elektronische Geräte für den Massenmarkt enthalten immer häufiger auch optische Elemente, die für Schlüsselfunktionen der elektronischen Geräte entscheidend sind. So werden derzeit Mobiltelefone mit integrierten Digitalkameras immer beliebter. Auch in optischen Speichervorrichtungen sind optische Elemente zum präzisen Abbilden und Formen von Lichtstrahlen beim Lesen und/oder Schreiben erforderlich. Insbesondere für Anwendungen für den Massenmarkt ist die Entwicklung kostengünstiger Herstellungsverfahren von optischen Elementen mit ausreichender Präzision von großer Bedeutung.

Bei der Heißformgebung von optischen Oberflächen lassen sich grundsätzlich die beiden Verfahren "Pressen" (pressing) und "Prägen" (embossing) unterscheiden. Beim "Pressen" wird die Form der Oberfläche eines Substrats bzw. Halbzeugs für das herzustellende optische Element in ihrer Gesamtheit verändert. So wird beispielsweise eine sphärische oder plane Oberfläche eines optischen Substrats bzw. Halbzeugs in eine bestimmte asphärische Oberfläche umgeformt. Beim "Prägen" wird hingegen das Profil der Oberfläche des Substrats bzw. Halbzeugs für das optische Element lokal verändert. So bleibt bei der Herstellung von diffraktiven optischen Elementen und von Mikrooptiken, also Strukturen, mit vergleichsweise kleinen Abmessungen, die zumeist plane oder lokal im Vergleich zu den herzustellenden Mikrostrukturen nur wenig gekrümmte Oberfläche erhalten und werden durch das "Prägen" lokal Vertiefungen oder Erhöhungen auf die Oberfläche aufgeprägt. Im Vergleich zum Pressen ist der Umformgrad beim Prägen wesentlich geringer.

Die Heißformgebung von optischen Elementen bietet dann besondere wirtschaftliche Vorteile, wenn eine Nachbearbeitung der optisch wirksamen Strukturen auf der Oberfläche des umgeformten optischen Elements nicht mehr erforderlich ist. Bekanntermaßen setzt dies eine hohe Präzision der zur Heißformgebung verwendeten Formwerkzeuge voraus. Diffraktive Optiken, wie beispielsweise Mikrolinsen, setzen eine Oberflächengüte von der Größenordnung von einem Viertel der Wellenlänge von optischem Licht voraus. Diffraktive Mikrooptiken sollten noch präziser hergestellt werden. Ein Problem bei der Herstellung von optischen Elementen mittels Heißformgebung stellt der Einschluss von Prozessgasen in der Oberfläche des optischen Elements während des Heißformgebungsprozesses dar, weil dies auf der Oberfläche des optischen Elements zu störenden kraterförmigen Vertiefungen führt. Aus dem Stand der Technik sind verschiedene Maßnahmen bekannt, um den Einschluss von Prozessgasen auf der Oberfläche von optischen Elementen während der Heißformgebung zu vermeiden.

Ein erster Lösungsansatz besteht darin, die Heißformgebung in einer Vakuumkammer durchzuführen. So ist beispielsweise eine Hochpräzisions-Glasformungs-Pressvorrichtung mit der Typenbezeichnung GMP-211V von Toshiba Machine Co., America erhältlich, mit der sich bei einem Vakuum, das besser als 6 * $10^{-1}$ Pa ist, eine maximale Presskraft von 19,6 kN für maximale Außendurchmesser der Prägestempel um bis zu 110 mm erzielen lässt. Dieser Lösungsansatz ist jedoch zeitaufwendig und mühsam und stellt hohe Anforderungen an die Vakuumpumpen.

Gemäß einem anderen Lösungsansatz, der in der japanischen Patent-Offenlegungsschrift Nr. 2002-293 553 A offenbart ist, wird zunächst mithilfe eines Vorprägeschrittes eine Glasvorform (glaspreform) hergestellt, bei der bereits Strukturen auf der Oberfläche ausgebildet sind, die in einem nachfolgenden Hauptprägeschritt in die gewünschten Strukturen umgeformt werden. Aufgrund des geringeren Umformungsgrades ist das Gesamtvolumen von Prozessgas, das zwischen dem Prägestempel und der Glasvorform eingeschlossen werden kann, geringer. Der Einschluss von Prozessgas kann jedoch nicht vollständig vermieden werden. Ferner wird ein zusätzliches Prägewerkzeug und ein zusätzlicher Prozessschritt benötigt, was aufwendig ist.

EP 648 712 A2 offenbart ein Verfahren zur Pressformung (press moulding) von optischen Elementen, bei dem ein Rohling in eine Pressform eingebracht wird und eine zum Pressen verwendete Druckkraft periodisch erhöht und reduziert wird. Während der Druckerhöhung wird die Oberfläche des Rohlings, die an der Oberfläche des Prägestempels anliegt, verformt, bis schließlich eine Prozessgas-Blase in einem von dem umgeformten Oberflächenbereich umrandeten Volumens ausgebildet ist. Beim Reduzieren des Druckes kann das in dem Volumen eingeschlossene und unter einem gewissen Überdruck stehende Prozessgas seitlich entlang der Oberfläche des Prägestempels entweichen. Durch die zwischenzeitliche Reduzierung des Drucks wird die Presszeit verlängert. Ferner lassen sich die Gaseinschlüsse nur schwer vorhersagen und modellieren, sodass die Präzision der herzustellenden optischen Elemente nur schwer im Voraus spezifiziert werden kann. Auch nach einer mehrmaligen periodischen Druckerhöhung und Druckreduzierung verbleiben restliche Prozessgaseinschlüsse, was die Oberflächengüte des optischen Elements mindert.

US 6,305,194 B1 offenbart ein Verfahren und eine Vorrichtung zum Pressformen eines Arrays von optischen Elementen. Auf eine schalenförmig ausgebildete zentrale Aufnahme eines Prägestempels wird eine vergleichsweise kleine Kugel aus einem optischen Material abgelegt. Durch das Gegeneinanderdrücken von zwei Prägestempeln wird die Kugel immer stärker flach gedrückt. Dabei fließt das Material radial auswärts und treibt restliches Prozessgas vor sich her und aus dem Volumen der Prägestempel heraus. Das Material des optischen Elements wird bei diesem Verfahren stark umgeformt, was zu langen Prozesszeiten und zu hohen Prozesskosten führt. Sind auf der Oberfläche des Prägestempels vergleichsweise feine Strukturen ausgebildet, beispielsweise zur Ausbildung von Mikrolinsen oder diffraktiven Strukturen, so fließt das Material während des Pressens vergleichsweise unkontrolliert in die Strukturen, beispielsweise in Vertiefungen. Deshalb kann nicht ausgeschlossen werden, dass restliches Prozessgas in der Oberfläche des optischen Elements während der Heißformgebung eingeschlossen ist.

US 6,305,194 B1 offenbart ferner ein Verfahren, bei dem eine obere Formwerkzeughälfte einen konvex gewölbten Abformbereich aufweist und eine untere Formwerkzeughälfte einen konkav gewölbten Abformbereich aufweist. Zwischen die beiden Formwerkzeughälften wird eine plan-konvexe Vorform (preform) eingebracht, die zu einer konkav-konvexen Linse umgeformt wird. Dabei ist der Krümmungsradius des konvex gewölbten Abformbereichs kleiner als der Krümmungsradius des konkav gewölbten Abformbereichs, sodass der jeweilige Abformbereich mit der Vorform beim Gegeneinanderdrücken der Formwerkzeughälften zunächst bei einem zentralen Bereich in Berührung gelangt, was bewirkt, dass kein Gas in dem jeweiligen Abformbereich gefangen bleibt, wenn das geschmolzene bzw. erweichte Material der Vorform radial so radial nach außen fließt.

Bei diesen Verfahren ist der Umformgrad der Vorform jedoch vergleichsweise hoch. Dies erfordert eine vergleichsweise lange Prozesszeit, was unwirtschaftlich ist. Ferner erfordert die vergleichsweise starke Umformung der Vorform vergleichsweise hohe Prozesstemperaturen, was zu Spannungen in dem optischen Element nach dem Umformen führen kann. Solche Spannungen können die Ursache für eine unerwünschte Doppelbrechung des optischen Elements sein. Bei den erforderlichen vergleichsweise hohen Prozesstemperaturen kann das erweichte bzw. geschmolzene Material der Vorform an dem jeweiligen Abformbereich anhaften bzw. ankleben, was die optische Güte des optischen Elements herabsetzt.

## Zusammenfassung der Erfindung

Aufgabe der vorliegenden Erfindung soll es sein, ein Verfahren und eine Vorrichtung zum Ausbilden eines optischen Elements durch Heißformgebung bereitzustellen, womit sich Gaseinschlüsse während der Heißformgebung noch wirkungsvoller vermeiden lassen und das optische Element noch präziser und kostengünstiger hergestellt werden kann.

Diese und weitere Aufgaben werden gemäß der vorliegenden Erfindung durch ein Verfahren nach Anspruch 1 und durch eine Vorrichtung nach Anspruch 19 gelöst. Weitere vorteilhafte Ausführungsformen sind Gegenstand der rückbezogenen Unteransprüche.

Ein Verfahren gemäß der vorliegenden Erfindung geht aus von den folgenden Schritten:

Bereitstellen eines Formwerkzeugs, auf dessen Oberfläche zumindest ein Abformbereich zum Abformen einer optischen Struktur auf ein Substrat ausgebildet ist; Bereitstellen des Substrats, wobei auf einer dem Formwerkzeug zugewandten Oberfläche des Substrats ein jeweils dem Abformbereich zugeordneter vorgeformter Bereich ausgebildet ist; Erwärmen des Substrats auf eine Temperatur oberhalb einer Übergangstemperatur eines Materials des Substrats; und Gegeneinanderdrücken des Formwerkzeugs und des Substrats, sodass der jeweilige vorgeformte Bereich in Anlage zu einer Oberfläche des zugeordneten Abformbereichs umgeformt wird, um ein optisches Element mit zumindest einer optischen Struktur auszubilden, deren Form durch die Form des zugeordneten Abformbereichs vorgegeben ist.

Gemäß einem ersten Gesichtspunkt zeichnet sich das Verfahren gemäß der vorliegenden Erfindung dadurch aus, dass das Formwerkzeug und das Substrat so bereitgestellt werden, dass ein zentraler Bereich des jeweiligen Abformbereichs an einem zentralen Bereich des zugeordneten vorgeformten Bereichs anliegt, wobei der jeweilige vorgeformte Bereich und der Abformbereich so ausgebildet sind, dass sich ein Spalt, der zwischen einer Oberfläche des jeweiligen vorgeformten Bereichs und einer Oberfläche des zugeordneten Abformbereichs ausgebildet ist, von dem zentralen Bereich zu einem Rand des jeweiligen vorgeformten Bereichs hin verbreitert.

Wenn während der Heißformgebung das Formwerkzeug und das Substrat gegeneinander gedrückt werden und sich aufgrund der Umformung des Substrats zu dem optischen Element aufeinander zu bewegen, wird das Material der Oberfläche des Substrats in dem jeweiligen vorgeformten Bereich in Anlage zu der Oberfläche des zugeordneten Abformbereichs des Formwerkzeugs zunehmend umgeformt. Ausgehend von dem glatt ausgebildeten zentralen Bereich des vorgeformten Bereichs, der bereits zu Beginn der Heißformgebung an dem korrespondierend glatt ausgebildeten zentralen Bereich des zugeordneten Abformbereichs anliegt, wo also kein Prozessgas eingeschlossen sein kann, geraten dabei zunächst an den zentralen Bereich angrenzende Abschnitte innerhalb des vorgeformten Bereichs in Anlage zu der Oberfläche des zugeordneten Abformbereichs. Im Verlauf der weiteren Heißformgebung wandert die Phasengrenze Substrat-Formwerkzeug-Gas von dem zentralen Bereich des vorgeformten Bereichs immer mehr zum Rand des jeweiligen vorgeformten Bereichs. Dabei wird das in dem Spalt noch vorhandene Prozessgas immer mehr aus dem vorgeformten Bereich verdrängt, bis schließlich das Substrat in dem vorgeformten Bereich vollflächig an der Oberfläche des zugeordneten Abformbereichs anliegt. Erfindungsgemäß wird somit kein Prozessgas zwischen dem Substrat und dem Formwerkzeug eingeschlossen.

Weil das Prozessgas sanft und kontinuierlich während der Heißformgebung aus dem Abformbereich verdrängt wird, ist erfindungsgemäß die Verwendung eines Vakuums während der Heißformgebung nicht erforderlich. Somit kann ein Prozessschritt eingespart werden und die Vorrichtung insgesamt kostengünstiger bereitgestellt werden. Erfindungsgemäß braucht der Druck zum Gegeneinanderdrücken des Formwerkzeugs und des Substrats nur einmal während eines vorbestimmten Zeitintervalls angelegt werden und kann der Druck während des gesamten Prozessschrittes aufrecht erhalten bleiben, vorzugsweise konstant gehalten werden. Eine periodische Erhöhung und Reduzierung des Pressdrucks ist somit nicht erforderlich.

Erfindungsgemäß ist der Umformgrad des Substrats während der Heißformgebung gering. Insbesondere ist die Grundfläche des Substrats, oder für den Fall, dass auf einem einzigen Substrat mehrere optische Elemente gleichzeitig ausgebildet werden sollen, beispielsweise zur Herstellung eines Mikrolinsen-Arrays oder von mehreren noch zu vereinzelnden optischen Elementen, die Grundfläche des jeweiligen vorgeformten Bereichs, vor der Heißformgebung im Wesentlichen identisch zu der Grundfläche des zugeordneten Abformbereichs, oder im Falle der gleichzeitigen Ausbildung mehrerer optischer Elemente des jeweils zugeordneten Abformbereichs. Die Heißformgebung kann erfindungsgemäß somit rasch ausgeführt werden. Eine aufwendige Nachbearbeitung, beispielsweise von Rändern des optischen Elements, kann erfindungsgemäß unterbleiben. Aufgrund des vergleichsweise geringen Umformgrads werden erfindungsgemäß die vorgeformten Bereiche des Substrats nur um eine Wegstrecke, die im Vergleich zur Gesamtdicke des Substrats erheblich kleiner ist, verformt bzw. wird das Substrat nur um eine Wegstrecke, die im Vergleich zur Gesamtdicke des Substrats erheblich kleiner ist, verkrümmt.

Bevorzugt ist das Profil des vorgeformten Bereichs so auf das Profil des zugeordneten Abformbereichs abgestimmt, dass der zwischen der Oberfläche des vorgeformten Bereichs und der Oberfläche des zugeordneten Abformbereichs existierende Spalt sich während der gesamten Heißformgebung stets zu dem Rand des jeweiligen vorgeformten Bereichs hin verbreitert. Somit ist gewährleistet, dass auch noch zum Ende der Heißformgebung, wenn bereits große Teile der Oberfläche des Abformbereichs vollflächig an dem Substrat anliegen, das Prozessgas weiterhin zu dem Rand des jeweiligen vorgeformten Bereichs hin entweichen kann. Eine geeignete Kontur des vorgeformten Bereichs kann durch einfache Simulation des Fließverhaltens des Materials des Substrats während der Heißformgebung berechnet werden.

Ein Verfahren gemäß einem weiteren Gesichtspunkt der vorliegenden Erfindung, das auch unabhängig beansprucht sein soll und insbesondere zum Ausbilden von konvex oder konkav gewölbten optischen Strukturen auf der Oberfläche eines optischen Elements verwendet wird, zeichnet sich dadurch aus, dass das Formwerkzeug und das Substrat so bereitgestellt werden, dass ein zentraler Bereich des jeweiligen Abformbereichs an einem zentralen Bereich des zugeordneten vorgeformten Bereichs anliegt, wobei der jeweilige vorgeformte Bereich und der zugeordnete Abformbereich so ausgebildet sind, dass gilt: r1 < r2, wobei r1 einem Krümmungsradius des jeweiligen Abformbereichs entspricht, der positiv ist, wenn ein Krümmungsmittelpunkt der Oberfläche des jeweiligen Abformbereichs in demjenigen Halbraum liegt, in dem das Formwerkzeug angeordnet ist, und der negativ ist, wenn der Krümmungsmittelpunkt der Oberfläche des jeweiligen Abformbereichs in dem anderen Halbraum liegt, und r2 einem Krümmungsradius des zugeordneten vorgeformten Bereichs entspricht, der negativ ist, wenn ein Krümmungsmittelpunkt der Oberfläche des jeweiligen vorgeformten Bereichs in demjenigen Halbraum liegt, in dem das Substrat angeordnet ist, und der positiv ist, wenn der Krümmungsmittelpunkt der Oberfläche des jeweiligen vorgeformten Bereichs in dem anderen Halbraum liegt, sodass zwischen der Oberfläche des jeweiligen vorgeformten Bereichs und der Oberfläche des zugeordneten Abformbereichs ein Spalt ausgebildet wird.

Bevorzugt sind das Profil des Abformbereichs des Formwerkzeugs und das Profil des jeweils zugeordneten vorgeformten Bereichs des Substrats so aufeinander abgestimmt, dass sich der Spalt ausgehend von dem zentralen Bereich zu einem Rand des jeweiligen vorgeformten Bereichs bzw. des Abformbereichs hin stetig verbreitert. Ein so ausgebildeter Spalt führt während der Heißformgebung zu einem stetigen und sanften Fließverhalten des Materials des Substrats innerhalb des Abformbereichs, sodass das Material des Substrats ausgehend von dem zentralen Bereich zunehmend nach außen fließen kann, um schließlich den gesamten Abformbereich auszufüllen. Beim auswärts gerichteten Fließen des Materials des Substrats wird das in dem Spalt noch vorhandene Prozessgas auswärts gedrückt und aus dem Abformbereich vollständig verdrängt.

Bevorzugt sind auf dem Weg von dem zentralen Bereich zu dem Rand des jeweiligen vorgeformten Bereichs bzw. des Abformbereichs keine Hindernisse vorhanden, die das Verdrängen des Prozessgases behindern können, sodass das Prozessgas aus dem Spalt zu dem Rand hin ungehindert verdrängt werden kann.

Um das Verdrängen des Prozessgases aus dem Spalt zwischen dem Formwerkzeug und dem Substrat noch weiter zu fördern, kann auf einer Oberfläche des Formwerkzeugs und/oder des Substrats außerhalb des jeweiligen Abformbereichs zumindest eine längliche Vertiefung, beispielsweise eine Rille oder eine Nut, ausgebildet sein, die zu dem Rand des Formwerkzeugs bzw. des Substrats verbindet. Die jeweilige Vertiefung ist somit an Bereichen vorgesehen, in denen keine optisch wirksamen Strukturen ausgebildet werden sollen. Die optische Funktion der optischen Strukturen, d.h. der diffraktiven oder refraktiven Strukturen, bleibt somit unbeeinflusst.

Die jeweilige längliche Vertiefung kann auch mit zumindest einem Spalt zwischen der Oberfläche des vorgeformten Bereichs und der Oberfläche des zugeordneten Abformbereichs kommunizieren, um das Prozessgas während der Heißformgebung noch wirkungsvoller abzuleiten.

Gemäß einer ersten Ausführungsform der vorliegenden Erfindung kann sich der Spalt zwischen der Oberfläche des vorgeformten Bereichs und der Oberfläche des zugeordneten Abformbereichs in nur einer Richtung parallel zu einer Oberfläche des Formwerkzeugs verbreitern. Sollen beispielsweise linienförmige erhabene Abschnitte zur Herstellung eines optischen Beugungsgitters ausgebildet werden, beispielsweise linienhafte Strukturen mit einem sägezahnförmigen Profil für den Fall eines geblazeten Beugungsgitters (blazed diffraction grating), so kann die Oberfläche des Substrats in einer Richtung parallel zu der Längsrichtung der linienhaften Strukturen auf der Oberfläche des Formwerkzeugs in geringem Ausmaß konvex von der Oberfläche des Formwerkzeugs weg gekrümmt sein. Bei der Heißformgebung gelangt somit zunächst der zentrale Bereich des konvex gewölbten Substrats in Anlage zu der Oberfläche des Formwerkzeugs. Während der Heißformgebung wird das optische Substrat zu einem planen Substrat flach gedrückt, auf dessen Oberfläche dann die linienhaften Strukturen abgeformt sind, und zwar korrespondierend zu den Strukturen, die auf der Oberfläche des Formwerkzeugs ausgebildet sind.

Gemäß einer weiteren Ausführungsform der vorliegenden Erfindung kann sich der Spalt zwischen der Oberfläche des vorgeformten Bereichs und der Oberfläche des zugeordneten Abformbereichs in zwei zueinander orthogonale Richtungen parallel zu einer Oberfläche des Formwerkzeugs verbreitern.

Gemäß einer weiteren Ausführungsform der vorliegenden Erfindung, der besonders zum Ausbilden von konvex oder konkav gewölbten optischen Strukturen angewendet wird, ist der Spalt zwischen der Oberfläche des vorgeformten Bereichs und der Oberfläche des zugeordneten Abformbereichs als Ringspalt ausgebildet, der sich ausgehend von dem zentralen Bereich radial auswärts verbreitert.

Erfindungsgemäß ist der auf der Oberfläche des Formwerkzeugs vorgesehene zumindest eine Abformbereich als erhabener Abschnitt oder als Vertiefung ausgebildet, mit einem Profil, das auf die optische Funktion abgestimmt ist, die von der auf der Oberfläche des optischen Elements auszubildenden optischen Struktur ausgeübt wird. Beispiele für solche Profile sind insbesondere konvex oder konkav gewölbte Profile, asphärisch gewölbte erhabene oder vertiefte Abschnitte, rechteckförmige oder polygonale Strukturen, auch solche, die geneigte Abschnitte beinhalten. Solche geeignet gestalteten Abformbereiche können auf der Oberfläche des Formwerkzeugs mittels geeigneter Prozesstechniken ausgebildet werden, insbesondere durch direkte Materialbearbeitung der Oberfläche des Formwerkzeugs, beispielsweise durch Laserablation, Ionenstrahl- oder Elektronenstrahlschreiben, Ionenstrahlätzen (ion beam etching oder ion beam milling), reaktives Ionenätzen, chemisch unterstütztes Ionenstrahlätzen, Nass- oder Trockenätzen.

Erfindungsgemäß wird das Substrat als Vorform (preform) bereitgestellt, auf dessen Oberfläche zumindest ein vorgeformter (preformed) Bereich in Form eines erhabenen Abschnittes oder einer Vertiefung ausgebildet ist, und zwar an einer Position, die der Position des zugeordneten Abformbereichs des Formwerkzeugs in der Press- oder Prägevorrichtung entspricht. Solche Vorformen können mittels beliebiger anderer Herstellungsverfahren bereitgestellt werden, beispielsweise auch durch direkte Bearbeitung der Oberfläche eines entsprechenden Substrats. Bevorzugt wird jedoch die Vorform erfindungsgemäß ebenfalls mithilfe einer Heißformgebung, durch Pressen oder Prägen, ausgebildet.

Um eine hohe Oberflächengüte der optischen Elemente zu erzielen, ist darauf zu achten, dass bereits die Vorform mit einer ausreichend hohen Oberflächengüte bereitgestellt wird. Diese kann jedoch erfindungsgemäß geringer sein als bei den herzustellenden optischen Elementen, weil die vorgeformten Bereiche während der Heißformgebung ja noch weiter umgeformt werden. Insgesamt wird die Oberflächengüte der optischen Strukturen somit im Wesentlichen durch die Oberflächengüte der Abformbereiche auf dem Formwerkzeug und durch die Eigenschaften des Materials des Substrats sowie durch die Prozessparameter während der Heißformgebung, insbesondere Druck und Temperatur, vorgegeben.

Bevorzugt entspricht das Volumen eines jeweiligen Abformbereichs dem Volumen des zugeordneten vorgeformten Bereichs. Somit ist gewährleistet, dass sämtliches Prozessgas aus dem Abformbereich des Formwerkzeugs vollständig verdrängt werden kann und der gesamte Abformbereich des Formwerkzeugs während der Heißformgebung von dem Material des Substrats ausgefüllt wird. Die Oberfläche des optischen Elements nach der Heißformgebung stellt somit eine Negativform der Oberfläche des Formwerkzeugs dar. Insbesondere kann das Gesamtvolumen der Abformbereiche dem Volumen des zugeordneten vorgeformten Bereichs bzw. dem Gesamtvolumen der zugeordneten vorgeformten Bereiche entsprechen, der bzw. die durch geeignete Wahl der Prozessparameter, insbesondere der Energie zum Erwärmen des Substrats, auf eine Temperatur oberhalb einer Übergangstemperatur des Materials des Substrats erwärmt wurde, um umformbar zu sein.

Gemäß einem weiteren Gesichtspunkt der vorliegenden Erfindung kann die Vorform auch so ausgelegt sein, dass nach der Heißformgebung an dem Rand des Abformbereichs noch eine geringe lichte Weite zwischen der Oberfläche des Substrats und der Oberfläche des Formwerkzeugs verbleibt. Eine solche lichte Weite erleichtert das spätere Abheben des Formwerkzeugs von der Oberfläche des optischen Elements (Entformen) und gewährleistet noch zuverlässiger, dass sämtliches Prozessgas während der Heißformgebung aus dem Abformbereich des Formwerkzeugs verdrängt wird. Ein solches Verfahren findet insbesondere dann Anwendung, wenn mittels Heißformgebung auf einem einzigen Substrat eine Mehrzahl von optischen Elementen ausgebildet werden sollen, wobei die Bereiche zwischen den optischen Strukturen optisch nicht funktionsbeteiligt sein sollen. In diesen Bereichen kann das Substrat nach der Heißformgebung durchtrennt werden, um die mehreren optischen Elemente zu vereinzeln.

Selbstverständlich kann die Oberfläche des Formwerkzeugs mit einer Beschichtung versehen sein, welche die Benetzbarkeit des Formwerkzeugs mit dem Material des Substrats während der Heißformgebung herabsetzt. Geeignete Beschichtungen sind aus dem Stand der Technik bekannt und schließen insbesondere dünne Metallisierungen, bevorzugt aus einem Edelmetall oder einer Edelmetalllegierung, ein.

Gemäß einem weiteren Gesichtspunkt der vorliegenden Erfindung werden das Formwerkzeug und das Substrat so bereitgestellt, dass für eine Formabweichung d zwischen dem Formwerkzeug und dem Substrat gilt:

$$d > 10 \ \mu m$$

beträgt und

$$d < (200 \ \mu m + D/10);$$

wobei D einen Durchmesser eines Abformbereichs bzw. einer Struktur auf dem Formwerkzeug in μm bezeichnet. Durch diese geringe Formabweichung kann erfindungsgemäß ein vorteilhaft geringer Umformungsgrad realisiert werden.

Das erfindungsgemäße Verfahren eignet sich zur Heißformgebung sehr unterschiedlicher diffraktiver und/oder refraktiver optischer Elemente, wie beispielsweise Mikrolinsen, Mikrolinsen-Arrays, plan-konvexer Linsen, plan-konkaver Linsen, konvex-konvexer Linsen, konkav-konvexer Linsen, konkav-konkaver Linsen, asphärischer Linsen, anamorphischer (anamorphic) und diffraktiver optischen Strukturen, beispielsweise von Beugungsgittern, auch geblazeten Beugungsgittern, und Fresnel-Zonenplatten.

Aus dergestalt ausgebildeten optischen Elementen lassen sich gemäß einem weiteren Gesichtspunkt der vorliegenden Erfindung beliebige optische Systeme, zusammengesetzt aus mehreren optischen Elementen, ausbilden.

Die optischen Elemente bzw. Systeme können erfindungsgemäß in beliebigen optischen Anwendungen eingesetzt werden, beispielsweise in der digitalen optischen Projektion, in analogen oder digitalen Kameras, insbesondere Handy-Kameras und Camcordern, in der Mikroskopie, als Linsen oder Linsen-Arrays, als Homogenisatoren, als Abbildungsoptiken, bei Anwendungen im Automotive-Bereich, beispielsweise für LED-Scheinwerfer, Head-up-displays, für optische Mikroreflektoren, zum Abbilden von Lasern, insbesondere RGB-Lasern, für Optiken im Bereich optical storage zum optischen Lesen und/oder Schreiben von Daten auf ein optisches Aufzeichnungsmedium, einschließlich von blue-ray-disks.

Für die Zwecke dieser Anmeldung sollen optische Elemente, beispielsweise Linsen, insbesondere hinsichtlich des Durchmessers von entsprechenden mikrooptischen Elementen unterschieden werden. So sollen optische Elemente, wie beispielsweise Linsen, einen Durchmesser von mindestens etwa 1 mm aufweisen, wohingegen mikrooptische Elemente einen Durchmesser von weniger als 1 mm aufweisen sollen.

Das erfindungsgemäße Verfahren ist nicht allein auf die Herstellung von mikrooptischen Strukturen beschränkt sondern kann allgemein zur Herstellung von beliebigen refraktiven und/oder diffraktiven Strukturen mittels Heißformgebung angewendet werden.

Das erfindungsgemäße Verfahren ist auf beliebige durch Heißformgebung verformbare optische Materialien anwendbar, ganz besonders bevorzugt auf beliebige Glassorten, insbesondere lowTg-Gläser, Kalk-Natronglas, Silicatglas, Boratglas, Borosilicatglas, Phosphatglas, Fluoridglas, Fluoridphosphatglas, Halogenidglas, optisches Glas, oder auf geeignete Kunststoffmaterialien für die Optik, insbesondere PMMI, COC, TOP, PMMA, Polyurethan, Topas, PC. Das Substrat kann einstückig aus einem beliebigen der vorgenannten Materialien ausgebildet sein. Gemäß einem weiteren Gesichtspunkt der vorliegenden Erfindung kann das Substrat auch als zwei- oder mehrlagiges Verbundmaterial ausgebildet sein, mit einer Deckschicht, in der vorgeformte Bereiche ausgebildet sind, die in der vorstehend beschriebenen Weise zu optischen Elementen bzw. Strukturen umgeformt werden. Dabei ist es zweckmäßig, wenn die Deckschicht eine Erweichungstemperatur unterhalb der Erweichungstemperatur einer darunter befindlichen Schicht des Verbundmaterials aufweist, sodass beim Umformen nur Material der Deckschicht, nicht aber der darunter befindlichen Schicht, erweicht und das Verbundmaterial somit stabil bleibt.

Weitere Gesichtspunkte der vorliegenden Erfindung betreffen ein entsprechend ausgebildetes Substrat, ein entsprechend ausgebildetes Formwerkzeug, eine Vorrichtung zum Ausbilden eines optischen Elements mithilfe des vorstehend beschriebenen Verfahrens, ein optisches Element sowie ein optisches Abbildungssystem mit zumindest einem solchen optischen Element.

**Figurenübersicht**

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden und worin:

Fig. 1a-1c    in einer schematischen Schnittansicht ein Verfahren gemäß der vorliegenden Erfindung zum Heißprägen bzw. Heißpressen einer plan-konvexen Linse darstellt;

Fig. 2a-2c    in einer schematischen Schnittansicht ein Verfahren gemäß der vorliegenden Erfindung zum Heißprägen bzw. Heißpressen eines optischen Elements mit einer planen Oberfläche darstellt, auf welcher diffraktive Strukturen ausgebildet sind;

Fig. 3a-3d    in einer schematischen Schnittansicht ein bevorzugtes Verfahren gemäß der vorliegenden Erfindung zum Heißprägen bzw. Heißpressen eines Arrays von konvexen Mikrolinsen auf einem planen Substrat darstellt;

Fig. 4a-4c    in einer schematischen Schnittansicht eine Modifikation des Verfahrens gemäß den Figuren 3a-3d zum Heißprägen bzw. Heißpressen eines Arrays von konvexen Mikrolinsen auf einem planen Substrat darstellt;

Fig. 5    in einer schematischen Schnittansicht eine weitere Modifikation des Verfahrens gemäß den Figuren 3a-3d zum Heißprägen bzw. Heißpressen eines Arrays von Hohlspiegeln auf einem planen Substrat darstellt;

Fig. 6    in einer schematischen Schnittansicht eine weitere Modifikation des Verfahrens gemäß den Figuren 3a-3d zum Heißprägen bzw. Heißpressen eines Arrays von konvexen Mikrolinsen auf einem planen Substrat darstellt;

Fig. 7    in einem schematischen Teilschnitt ein Formwerkzeug und ein optisches Substrat zur Ausbildung von prismenförmigen, erhabenen optischen Strukturen auf der Oberfläche des Substrats darstellt; und

Fig. 8    in einer schematischen Darstellung eine Vorzeichenkonvention zur Charakterisierung der Krümmungsradien eines vorgeformten Bereichs eines

Substrats und eines Abformbereichs eines Formwerkzeugs erläutert, die zur Charakterisierung der vorliegenden Erfindung verwendet werden kann.

**Ausführliche Beschreibung bevorzugter Ausführungsbeispiele**

In den Figuren bezeichnen identische Bezugszeichen identische oder im Wesentlichen gleich wirkende Elemente oder Elementgruppen.

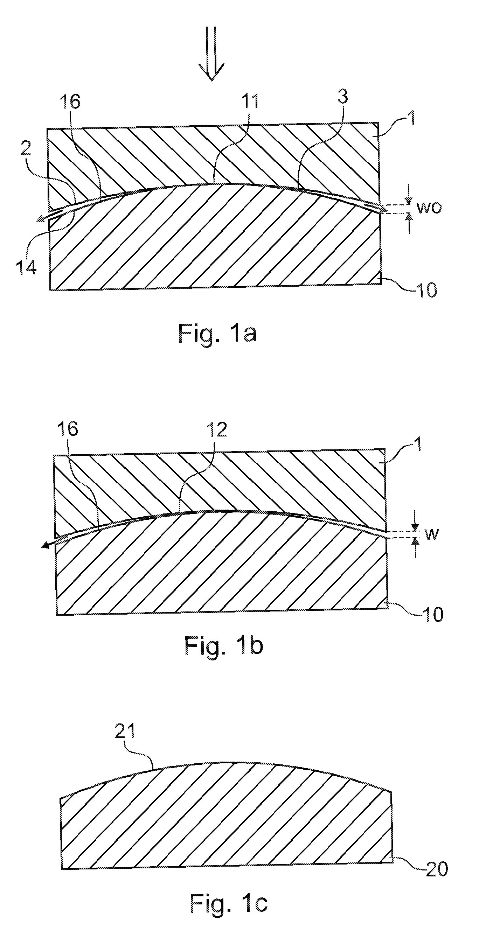

Anhand der Figuren 1a-1c wird nachfolgend ein Verfahren zum Heißprägen bzw. Heißpressen einer plan-konvexen Linse beschrieben. Gemäß der Fig. 1a werden ein Prägestempel 1 und ein Substrat 10, beispielsweise eine Glasvorform (glass preform) in einer Vorrichtung angeordnet, in welcher der Prägestempel 1 und das Substrat 10 mittels einer Kraft, die durch den vertikalen Pfeil angedeutet ist, gegeneinander gedrückt werden. Gemäß der Fig. 1a weisen der Prägestempel 1 und das Substrat 10 plane Rückseiten auf, die während der Heißformgebung parallel zueinander ausgerichtet sind. In der Oberfläche des Prägestempels 1 ist eine konkave Vertiefung 3 ausgebildet. Auf der Oberfläche des Substrats 10 ist ein konvex gewölbter, erhabener Abschnitt 16 ausgebildet. Der Krümmungsradius der konkaven Vertiefung 3 ist größer als der Krümmungsradius des konvex gewölbten Abschnittes 16.

Die konkave Vertiefung 3 dient als Abformbereich. Mittels eines Heißformgebungsprozesses, wie nachfolgend beschrieben, soll das Profil der konkaven Vertiefung 3 auf die Oberfläche des Substrats 10 abgeformt werden. Der konvex gewölbte Abschnitt 16 ist im Sinne der vorliegenden Anmeldung vorgeformt, beispielsweise mithilfe eines weiteren Heißformgebungsprozesses. Das Substrat 10 kann selbstverständlich auch als geeignet geschliffener oder vorgeformter, beispielsweise pressgeformter, Rohling bereitgestellt werden. Wie in der Fig. 1a gezeigt, entspricht die Grundfläche der konvexen Wölbung 16 im Wesentlichen der Grundfläche der konkaven Vertiefung 3.

Zu Beginn der Heißformgebung werden der Prägestempel 1 und das Substrat 10 so aufeinander zu bewegt, dass die zentralen Bereiche 11 der konkaven Vertiefung 3 und des konvex gewölbten Abschnittes 16 aneinander anliegen. In dieser Lage verbleibt an dem Rand 2 der konkaven Vertiefung 3 und an dem Rand 14 des Substrats 10 eine lichte Weite WO, die im Vergleich zu den Querabmessungen der konkaven Vertiefung 3 bzw. des gewölbten Abschnittes 16 klein ist.

Zur Heißformgebung wird das Substrat 10 auf eine Temperatur oberhalb einer Übergangstemperatur (transition temperature) des Materials des Substrats 10 erwärmt, sodass die Oberfläche des Substrats 10 verformbar ist. Aufgrund des Drucks zwischen dem Prägestempel 1 und dem Substrat 10 wird der konvex gewölbte Abschnitt 16 ausgehend von dem zentralen Bereich 11 zunehmend verformt. Dabei wird das Substratmaterial ausgehend von dem zentralen Bereich 11 zunehmend nach außen, zu dem Randbereich 14 des Substrats 10 hin, verdrängt. In der Fig. 1b bezeichnet der mit dem Bezugszeichen 12 bezeichnete und fett hervorgehobene Bereich einen umgeformten Bereich, in welchem das Material des Substrats 10 noch verformbar ist, also auf eine Temperatur oberhalb der Übergangstemperatur des Materials des Substrats 10 erwärmt ist. Während der Heißformgebung bewegen sich der Prägestempel 1 und das Substrat 10 somit aufeinander zu, sodass die lichte Weite w an dem Rand des Prägestempels 1 bzw. des Substrats 10 kleiner wird. Wie durch die Pfeile angedeutet, wird beim Verdrängen des Substratmaterials Prozessgas, das in dem Ringspalt zwischen der konkaven Vertiefung 3 des Prägestempels 1 und dem konvex gewölbten Abschnitt 16 des Substrats 10 eingeschlossen ist, allmählich nach außen hin verdrängt. Die Heißformgebung wird solange fortgeführt, bis der Spalt zwischen dem Prägestempel 1 und dem Substrat 10 verschwunden ist. Dann liegt die Oberfläche des Substrats 10 vollflächig an der Oberfläche der konkaven Vertiefung 3 des Prägestempels 1 an. Das Profil des Substrats 1 entspricht somit exakt dem Profil der als Abformbereich dienenden konkaven Vertiefung 3 des Prägestempels 1. Nach dem Abheben des Prägestempels 1 von dem umgeformten Substrat 10 erhält man somit ein optisches Element 20 mit einer konvex gewölbten Oberfläche 21, wie in der Fig. 1c gezeigt. Die Form der konvex gewölbten Oberfläche 21 entspricht exakt der Form der konkaven Vertiefung 3 in dem Prägestempel 1.

Weil während der Heißformgebung die Phasengrenze Substrat-Prägestempel-Prozessgas ausgehend von dem zentralen Bereich 11 allmählich bis zum Rand 2 bzw. 14 des Prägestempels 1 bzw. des Substrats 10 wandert, wird sämtliches Prozessgas aus dem Ringspalt zwischen dem Prägestempel 1 und dem Substrat 10 verdrängt. Auf der konvex gewölbten Oberfläche 21 des optischen Elements 20 sind somit keine kraterähnlichen Strukturen mehr vorhanden, die im Stand der Technik von Gaseinschlüssen während der Heißformgebung herrühren.

Wenngleich in der Fig. 1a nicht dargestellt, wird dem Fachmann ersichtlich sein, dass das Substrat 10 vor der Heißformgebung zusätzlich auch senkrecht zu der Zeichenebene der Fig. 1a konvex gewölbt sein kann, so dass das Prozessgas zusätzlich auch in einer Richtung senkrecht zu der Zeichenebene der Figuren 1a-1c während der Heißformgebung entweichen kann. Wie dem Fachmann ferner ersichtlich sein wird, wurde vorstehend anhand der Figuren 1a-1c das Grundprinzip der vorliegenden Erfindung erläutert, wonach das Prozessgas während der Heißformgebung allmählich nach außen hin verdrängt wird. Im Anschluss an die Heißformgebung bildet das optische Element 20 bevorzugt eine Zylinderlinse aus, die sich in einer Richtung senkrecht zu der Zeichenebene der Fig. 1c erstreckt. Grundsätzlich ist die vorliegende Erfindung jedoch nicht auf die Ausbildung von Zylinderlinsen beschränkt, sondern kann das optische Element 20 gemäß der Fig. 1c gemäß einem weiteren bevorzugten Gesichtspunkt der vorliegenden Erfindung auch eine plan-konvexe optische Linse ausbilden.

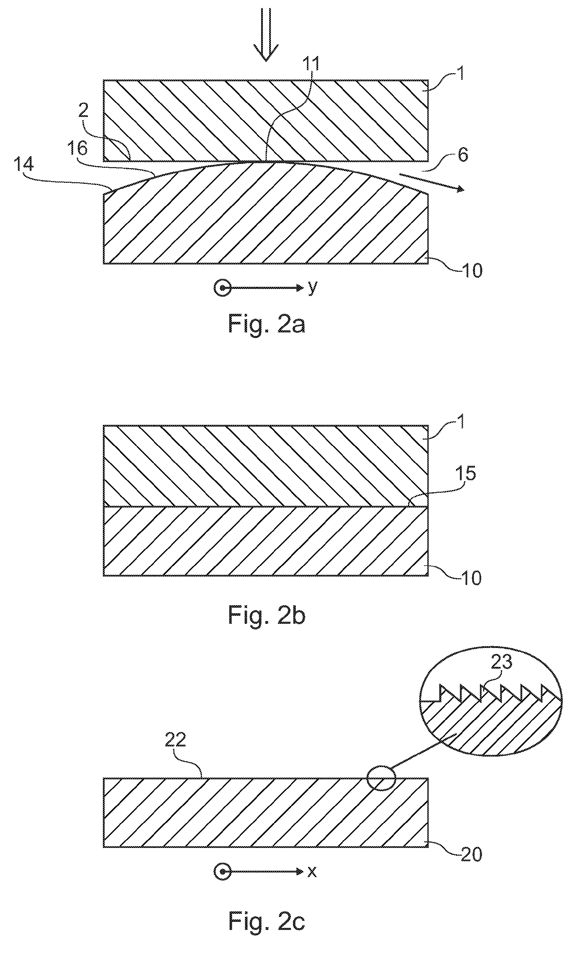

Anhand den Figuren 2a-2c wird nachfolgend ein Verfahren zum Ausbilden eines geblazeten Beugungsgitters auf einem planen Substrat 10 beschrieben werden. Dabei sei angenommen, dass das Substrat 10 eine Ebene aufspannt, die von zwei zueinander orthogonalen Koordinatenachsen x und y aufgespannt wird. Wie in der Fig. 2a gezeigt, wird das Substrat 10, beispielsweise ein Glassubstrat, als Vorform mit einem in der y-Richtung konvex gewölbten Abschnitt 16 bereitgestellt. Zwischen der Oberfläche des Prägestempels 1 und der Oberfläche des Substrats 10 besteht somit während der gesamten Heißformgebung ein Spalt, der sich nach außen hin kontinuierlich verbreitert, wobei die eine Oberfläche des Spaltes plan ist und durch die Oberfläche des Prägestempels 1 festgelegt wird und wobei die andere Oberfläche des Spaltes konvex gewölbt ist und durch die Oberfläche des Substrats 10 vorgegeben ist. An dem Rand 14 des Substrats 10 besteht somit eine lichte Weite WO, die im Vergleich zu den Querabmessungen des Substrats 10 gering ist. Beispielsweise kann der Krümmungsradius des konvex gewölbten Abschnittes 16 etwa 100 bis 400 mm betragen.

Die Fig. 2b zeigt den Prägestempel 1 und das Substrat 10 unmittelbar vor dem Ende der Heißformgebung, wenn die Oberfläche des Substrats 10 vollflächig an der Oberfläche des Prägestempels 1 anliegt.

Nach dem Abheben des Prägestempels 1 erhält man so ein optisches Element 20 mit einer umgeformten planen Oberfläche 22, auf der eine Mehrzahl von äquidistanten, linienhaften Strukturen 23 mit einem sägezahnförmigen Profil ausgebildet sind. Gemäß der Fig. 2c verlaufen die linienhaften Strukturen 23 entlang der y-Richtung. Während der Heißformgebung wird also die zunächst in der y-Richtung konvex gewölbte Oberfläche 16 des Substrats 10 so umgeformt, dass sich der Spalt 6 ausgehend von dem zentralen Bereich 11 zunehmend verschmälert und das in dem Spalt 6 eingeschlossene Prozessgas von dem nach außen hin verdrängten Substratmaterial in y-Richtung verdrängt wird, so dass das Prozessgas allmählich aus dem Spalt 6 vollständig entweicht, wie in der Fig. 2a durch den Pfeil angedeutet.

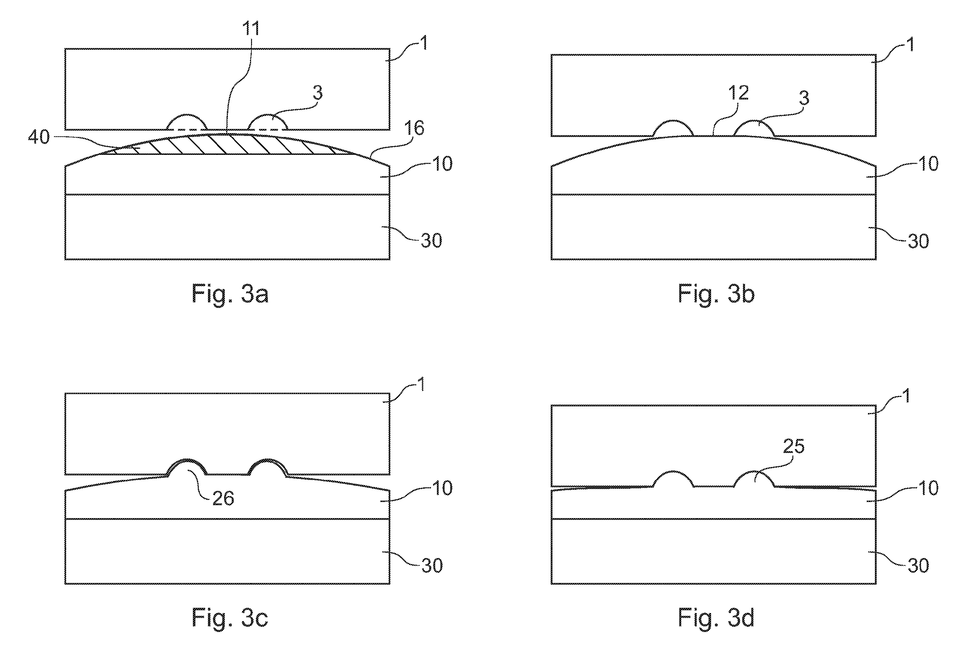

Anhand der Fig. 3a-3d wird nachfolgend ein bevorzugtes Verfahren gemäß der vorliegenden Erfindung zum Heißprägen bzw. Heißpressen eines Arrays von konvexen Mikrolinsen auf einem planen Substrat beschrieben werden. Wie in der Fig. 3a gezeigt, ist das Substrat 10, das auf einem Gegenstempel 30 gehalten ist, vergleichbar zur Fig. 1a konvex nach außen gewölbt. In dem Prägestempel 1 sind zwei konkave Vertiefungen 3 ausgebildet, die identisch zueinander oder verschieden voneinander ausgebildet sein können. Wenn der Prägestempel 1 und das Substrat 10 aufeinander zu bewegt werden, wird der flache Bereich des Prägestempels 1 zwischen den beiden konkaven Vertiefungen 3 als erstes mit dem zentralen Bereich 11 der konvexen Wölbung 16 des Substrats 10 in Anlage geraten.

Wenn der Prägestempel 1 und das Substrat 10 weiter gegeneinander gedrückt werden, wird schließlich zunächst der zentrale Bereich umgeformt, wie in der Fig. 3b durch das Bezugszeichen 12 angedeutet. Wenn der Prägestempel 1 und das Substrat 10 weiter gegeneinander gedrückt werden, wird das Substratmaterial zunehmend in die konkave Vertiefung 3 des Prägestempels 1 hineingedrückt. Dabei wird Prozessgas, das in der konkaven Vertiefung 3 vorhanden ist, allmählich nach außen hin aus der konkaven Vertiefung 3 verdrängt.

Wenn der Prägestempel 1 und das Substrat 10 noch weiter gegeneinander gedrückt werden, sind schließlich die konkaven Vertiefungen 3 nahezu vollständig von dem noch verformbaren Substratmaterial ausgefüllt, sodass auf der Oberfläche des Substrats 10 konvexe Wulste 26 ausgebildet sind. Wenn der Prägestempel 1 und das Substrat 10 noch weiter gegeneinander gedrückt werden, füllt schließlich das Substratmaterial die konkaven Vertiefungen des Prägestempels 1 vollständig aus, wobei das Substratmaterial vollständig an den Innenoberflächen der konkaven Vertiefungen des Prägestempels 1 anliegt, sodass auf dem Substrat 10 zwei konvexe Mikrolinsen 25 ausgebildet sind, wie in der Fig. 3d gezeigt. Nach dem Entformen können die beiden Mikrolinsen 25 auch in einem nachfolgenden Prozessschritt vereinzelt werden.

In der Fig. 3a sollen die gestrichelten Linien das von den konkaven Vertiefungen 3 eingeschlossene Volumen V1 repräsentieren. Ferner soll der durch die Schraffur angedeutete Bereich 40 nahe dem zentralen Bereich 11 des Substrats 10 das durch die Heißformgebung umzuformende und zu verdrängende Substratmaterial mit dem Volumen V2 repräsentieren. In dem Volumen V2 ist die Temperatur des Substrats oberhalb der Erweichungstemperatur des Materials des Substrats, was durch geeignete Wärmebeaufschlagung ohne weiteres erreicht werden kann. Damit das zwischen dem Prägestempel 1 und dem Substrat 10 eingeschlossene Prozessgas vollständig entweichen kann, bevor das umgeformte Substrat vollständig an dem Prägestempel anliegt, ist für den in den Figuren 3a-3d dargestellten Fall, wonach auf dem Substrat 10 zwei Mikrolinsen ausgebildet werden, erfindungsgemäß das Volumen V2 größer oder gleich dem Volumen 2 x V1. Allgemein gilt, dass das insgesamt von den vorgeformten Bereichen eingeschlossene Volumen, das sich auf einer Temperatur oberhalb der Erweichungstemperatur des Substratmaterials befindet, größer oder gleich dem von den Abformungsbereichen eingeschlossenen Volumen ist.

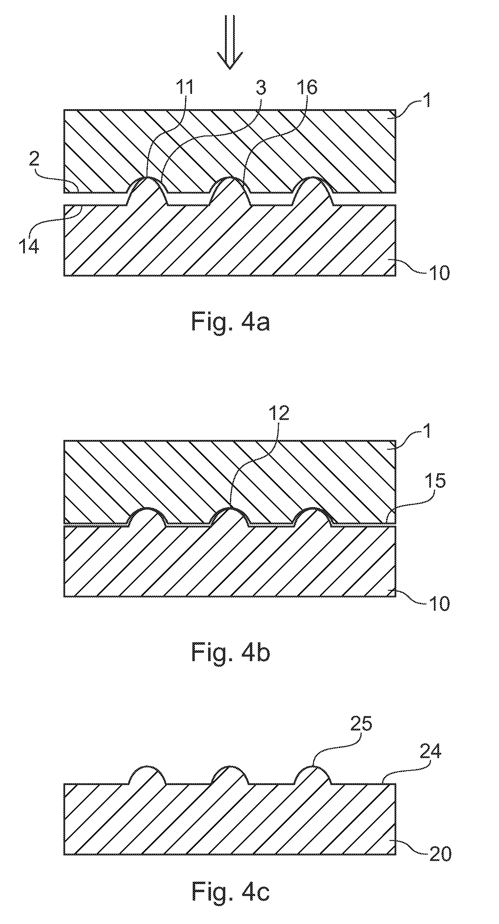

Anhand der Figuren 4a-4c wird nachfolgend eine Modifikation des Verfahrens gemäß den Fig. 3a-3d zum Heißprägen bzw. Heißpressen eines Arrays von konvexen Mikrolinsen auf einem planen Substrat beschrieben. Wie in der Fig. 4a gezeigt, sind auf der Oberfläche des Prägestempels 1 eine Mehrzahl von konkaven Vertiefungen 3 ausgebildet, die als Abformbereich dienen und das Profil der auszubildenden optischen Strukturen festlegen sollen. Gemäß der Fig. 4a wird ein Substrat 10, beispielsweise eine Glasvorform, bereitgestellt, auf deren Oberfläche an Positionen, die den Positionen der konkaven Vertiefungen 3 des Prägestempels 1 entsprechen, eine Mehrzahl von konvex gewölbten, erhabenen Abschnitten 16 ausgebildet sind. Der Krümmungsradius der konvex gewölbten Abschnitte 16 ist kleiner als der Krümmungsradius der konkaven Vertiefungen 3 in dem Prägestempel 1. Wenn die zentralen Bereiche 11 der konvex gewölbten Abschnitte 16 an den zentralen Bereichen 11 der konkaven Vertiefungen 3 des Prägestempels 1 anliegen, verbleibt somit ein sich in Querrichtung stetig verbreiternder Spalt zwischen der Oberfläche der konkaven Vertiefung 3 und der Oberfläche des konvex gewölbten Abschnittes 16. In den Abschnitten zwischen den konkaven Vertiefungen 3 ist die Oberfläche des Prägestempels 1 und die Oberfläche des Substrats 10 plan ausgebildet.

Die Fig. 4b zeigt den Prägestempel 1 und das Substrat 10 zum Ende des Heißformgebungsprozesses, wenn praktisch der gesamte gewölbte Abschnitt 16 umgeformt wurde und nur an den Randbereichen der jeweiligen konkaven Vertiefung 3 sowie zwischen den konkaven Vertiefungen 3 noch ein schmaler Spalt zwischen der Oberfläche des Prägestempels 1 und der Oberfläche des Substrats 10 verbleibt.

Nach Abheben des Prägestempels 1 (Entformen) bleibt ein optisches Element 20 zurück, auf dessen Oberfläche eine Mehrzahl von konvexen Mikrolinsen 25 und von planen Abschnitten 24 ausgebildet sind.

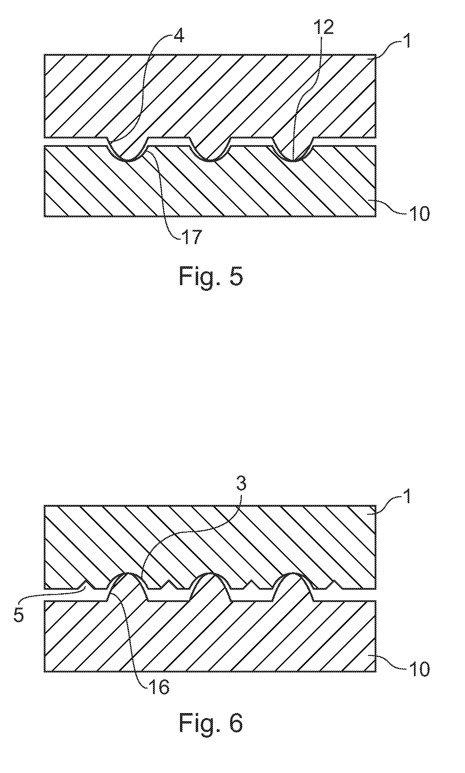

Wie in der Fig. 5 gezeigt, eignet sich das erfindungsgemäße Verfahren auch zum Ausbilden von konkaven Vertiefungen 17 auf einem Substrat 10. Zu diesem Zweck sind auf der Oberfläche des Prägestempels 1 eine Mehrzahl von konvex gewölbten, erhabenen Abschnitten 4 ausgebildet. Nach der Heißformgebung können die konkaven Vertiefungen 17 mit einer Reflexionsbeschichtung versehen werden, um einen Hohlspiegel auszubilden.

Wie in der Fig. 6 gezeigt, können bei dem Prägestempel 1 gemäß der Fig. 4a zusätzliche längliche Vertiefungen, beispielsweise keilförmige Rillen 5, vorgesehen sein, die mit dem Randbereich einer jeweiligen konkaven Vertiefung 3 in dem Prägestempel 1 kommunizieren können, um restliches Prozessgas aus der als Abformbereich wirkenden konkaven Vertiefung 3 des Prägestempels 1 abzuleiten.

Wie dem Fachmann ohne weiteres ersichtlich sein wird, kann ein gemäß den Fig. 4a, 5 oder 6 ausgebildetes Substrat mit konvexen Erhebungen oder konkaven Vertiefungen durch geeignetes Schleifen eines Substrats bereitgestellt werden. Oder das Substrat gemäß den Fig. 4a, 5 oder 6 kann in einem weiteren Prozessschritt durch Heißformgebung, beispielsweise Heißprägen, eines Substrats in geeigneter Weise bereitgestellt werden. Da dies üblicherweise weitere Kosten verursacht, wird erfindungsgemäß grundsätzlich die Heißformgebung in einem einzigen Prozessschritt zur gleichzeitigen Herstellung einer Mehrzahl von optisch wirksamen Strukturen bevorzugt, wie in den Fig. 3a-3d dargestellt.

Wie dem Fachmann ohne weiteres ersichtlich sein wird, können mit dem erfindungsgemäßen Verfahren auch optische Elemente mit zumindest einer asphärisch gekrümmten oder als Freiformfläche ausgebildeten Oberfläche ausgebildet werden. Dabei kann der jeweilige vorgeformte Bereich des Substrats vor dem Umformen zu der asphärisch gekrümmten oder als Freiformfläche ausgebildeten Oberfläche sphärisch gekrümmt sein. Unter Freiformfläche im Sinne der vorliegenden Anmeldung seien dabei Flächen in einer x,y-Ebene verstanden, die durch die nachfolgende Beziehung beschrieben werden können:

$$f(x,y) := \frac{\sum_{m=0}^{N} \sum_{n=0}^{N} C_{\frac{(m+n)^2+m+3\cdot n}{2}} \cdot x^m \cdot y^n}{L}$$

wobei L=konstant und N=10 gilt.

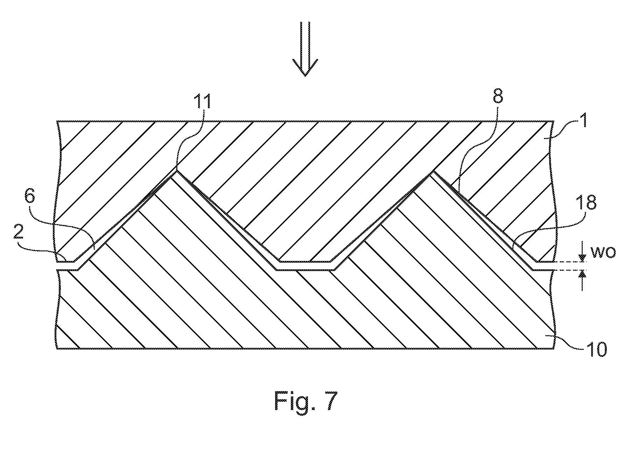

Wie in der Fig. 7 gezeigt, eignet sich das erfindungsgemäße Verfahren auch zur Heißformgebung von nicht gewölbten optischen Strukturen. Gemäß der Fig. 7 sind in der Oberfläche des Prägestempels 1 eine Mehrzahl von Schrägen 8 ausgebildet, um keilförmige Rinnen in der Oberfläche des Prägestempels 1 auszubilden. An entsprechenden Stellen sind auf der Oberfläche des Substrats 10, beispielsweise einer Glasvorform, Schrägen 18 ausgebildet, um auf der Oberfläche des Substrats 10 keilförmige, erhabene Abschnitte auszubilden. Gemäß der Fig. 7 ist der Steigungswinkel der Schräge 18 größer als der Steigungswinkel der Schräge 8, sodass sich der Spalt 6 zwischen der Oberfläche des Prägestempels 1 und der Oberfläche des Substrats 10 ausgehend von dem zentralen Bereich 11, wo die Scheitelpunkte der keilförmigen Vertiefungen bzw. erhabenen Abschnitte einander berühren, nach außen hin kontinuierlich verbreitert. Während der Heißformgebung verschmälert sich dieser Spalt 6 zunehmend, bis schließlich die Oberflächen des Prägestempels 1 und des Substrats 10 vollflächig aneinander anliegen.

Wenngleich in den Fig. 4a bis 7 nicht dargestellt, kann das Substrat vor dem Heißformgebungsprozess in einer Richtung senkrecht zur Zeichenebene der Fig. 4a bis 7 auch konvex gewölbt sein.

Selbstverständlich kann das Substrat 10 gemäß der Fig. 7 zusätzlich auch in einer Richtung senkrecht zu der Zeichenebene geringfügig konvex gewölbt sein, beispielsweise wie in der Fig. 2a gezeigt, sodass das in dem Spalt 6 eingeschlossene Prozessgas während der Heißformgebung noch effektiver verdrängt werden kann.

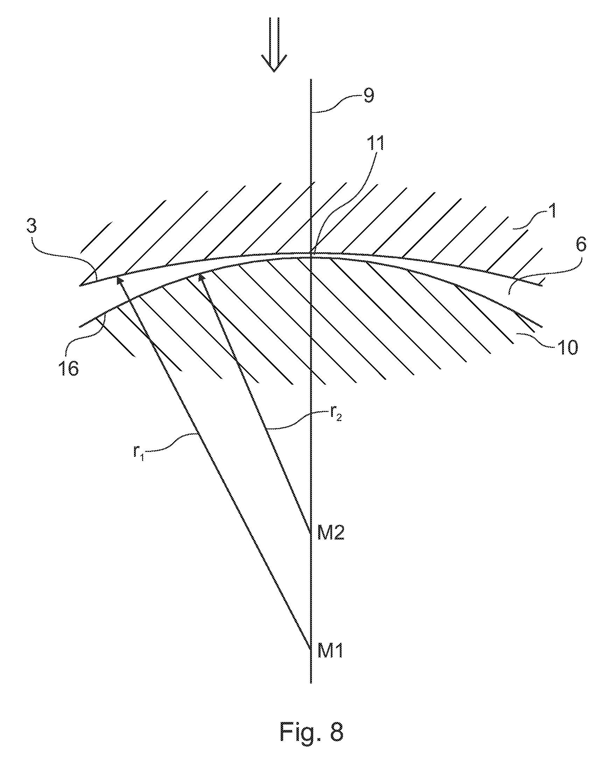

Anhand der Fig. 8 wird nachfolgend eine Vorzeichenkonvention zur Charakterisierung von konvex oder konkav gewölbten Abformbereichen bzw. vorgeformten Bereichen eines erfindungsgemäßen Prägestempels bzw. eines erfindungsgemäßen Substrats erläutert werden. Gemäß der Fig. 8 sei angenommen, dass die Mittelachse 9 senkrecht auf eine Tangente an die konvex gewölbte Oberfläche des Substrats 10 steht und durch den zentralen Bereich 11 verläuft, wo der konvex gewölbte Abschnitt des Substrats 10 und die konkave Vertiefung des Prägestempels 1 unmittelbar vor einer Heißformgebung aneinander anliegen. In dieser Konfiguration werden die Krümmungsmittelpunkte M1 der konkaven Vertiefung 3 des Prägestempels 1 bzw. M2 der konvexen Wölbung 16 des Substrats 10 auf der Mittelachse 9 liegen. In der Fig. 8 deutet der Pfeil r1 den Krümmungsradius der konkaven Vertiefung 3 in der Oberfläche des Prägestempels 1 an und deutet der Pfeil r2 den Krümmungsradius der konvexen Wölbung 16 auf der Oberfläche des Substrats 10 an. Zur Charakterisierung sei angenommen, dass die Krümmungsradien r1, r2 vorzeichenbehaftete Zahlen sind. Die Vorzeichenkonvention zur Charakterisierung der Oberflächen erfolgt dabei in einer Weise, die in der Optik für die Charakterisierung der Brechkraft von sphärisch gewölbten Grenzflächen in der Näherung der paraxialen Optik verwendet wird.

Gemäß der Fig. 8 unterteilt die Oberfläche der konkaven Vertiefung 3 die Zeichenebene in einen oberen Halbraum auf, in welchem der Prägestempel 1 angeordnet ist, und in einen unteren Halbraum, in welchem der Prägestempel 1 nicht angeordnet ist. Auch die konvex gewölbte Oberfläche 16 unterteilt die Zeichenebene der Fig. 8 in einen oberen Halbraum, in welchem das Substrat 10 nicht angeordnet ist, und in einen unteren Halbraum, in welchem das Substrat 10 angeordnet ist. Zur Charakterisierung der Oberflächen des Abformbereichs 3 und des vorgeformten Bereichs 16 sei angenommen, dass der Krümmungsradius r1 des Abformbereichs 3 des Prägestempels 1 positiv ist, wenn der Krümmungsmittelpunkt der Oberfläche des Abformbereichs in demjenigen Halbraum liegt, in dem der Prägestempel 1 angeordnet ist, und dass der Krümmungsradius r1 negativ ist, wenn der Krümmungsmittelpunkt der Oberfläche des Abformbereichs 3 in dem anderen Halbraum liegt. Ferner sei angenommen, dass der Krümmungsradius r2 des zugeordneten vorgeformten Bereichs 16 des Substrats 10 negativ ist, wenn der Krümmungsmittelpunkt der Oberfläche des vorgeformten Bereichs 16 in demjenigen Halbraum liegt, in dem das Substrat 10 angeordnet ist, und dass der Krümmungsradius r2 positiv ist, wenn der Krümmungsmittelpunkt der Oberfläche des vorgeformten Bereichs 16 in dem anderen Halbraum liegt.

In dieser Vorzeichenkonvention ist in dem Beispiel gemäß der Fig. 8 der Krümmungsradius r1 negativ und ist auch der Krümmungsradius r2 negativ. Wie der Fig. 8 entnehmbar ist, ist der Absolutbetrag von r1 größer als der Absolutbetrag von r2. Somit gilt: r1 < r2 < 0.

Für den entsprechenden Fall, dass eine konkav gewölbte Oberfläche abgeformt werden soll, wäre der Abformbereich des Prägestempels 1 konvex gewölbt und der entsprechende Krümmungsradius r1 positiv. Ferner wäre der zugeordnete vorgeformte Bereich auf der Oberfläche des Substrats konkav gewölbt, der entsprechende Krümmungsradius r2 also positiv. Dabei muss der Absolutbetrag von r2 größer sein als der Absolutbetrag von r1. Somit gilt für diesen Fall: 0 < r1 < r2.

In dieser Konvention wäre der Krümmungsradius einer planen Oberfläche unendlich. Soll beispielsweise eine konkav gewölbte Linsenoberfläche aus einer flachen Glasvorform hergestellt werden, so wäre der Abformbereich des Prägestempels konvex gewölbt, also der entsprechende Krümmungsradius r1 positiv, und wäre der Krümmungsradius der flachen Glasvorform unendlich groß. Somit gilt: r1 < r2.

Selbstverständlich unterliegt die vorstehend erläuterte Vorzeichenkonvention der Nebenbedingung, dass der zentrale Bereich des Abformbereichs unmittelbar vor dem Heißformgebungsprozess an dem zentralen Bereich des vorgeformten Bereichs anliegen können muss. Dies schließt somit die Ausbildung einer in alle Richtungen einer Ebene konvex gewölbten Linse aus einem flachen Glaspreform aus.

### Ausführungsbeispiel 1

Zum Pressen eines planen Zylinderlinsenarrays (Durchmesser 30 mm) mit asphärischen Zylinderlinsen wird eine Glasvorform mit gleichem Durchmesser, einer planen Seite und einer konvexen Seite mit einem Krümmungsradius von 300 mm verpresst. Die konvexe Seite ist dabei dem Pressstempel mit dem Zylinderlinsenarray zugewandt.

Die Höhe der Zylinderlinsen beträgt etwa 0,3 mm. Aufgrund der Krümmung der Glasvorform ist ein zusätzlicher Pressweg von etwa 0,4 mm zu bewältigen. Die Heißformgebung findet unter einer Stickstoffatmosphäre statt, um die Formwerkzeuge gegen Korrosion zu schützen.

Es ergab sich, dass die asphärischen Flächen der Zylinderlinsen ohne jegliche Unebenheiten aufgrund von Stickstoffeinschlüssen ausgebildet werden konnten.

### Ausführungsbeispiel 2

Zum Pressen einer asphärischen Abbildungslinse wird eine Glasvorform mit gleichem Durchmesser (70 mm), einer planen Seite und einer konvexen Seite mit einem Krümmungsradius von 45 mm verpresst. Die konvexe Seite ist dabei dem Pressstempel mit dem Zylinderlinsenarray zugewandt. Aufgrund der Krümmung der Glasvorform ist ein zusätzlicher Pressweg von etwa 0,3 mm zu bewältigen. Es ergab sich, dass die asphärischen Flächen ohne jegliche Unebenheiten aufgrund von Stickstoffeinschlüssen ausgebildet werden konnten. Die Strukturhöhe ergibt sich allgemein aus der nachfolgenden Beziehung:

$$z(r) = \frac{cr^2}{1 + \sqrt{1-(1+k)c^2 r^2}} + \alpha_1 r^2 + \alpha_2 r^4 + \ldots \alpha_n r^{2n}$$

**mit:**

> **z: Linsenhöhe**
> **c: Krümmung**
> **k: konischer Parameter.**

Bei dem Ausführungsbeispiel wurden die Parameter wie folgt gewählt:

> c=1/36.409;
> k=-1;
> a2=1.08E-06
> a4=2.16E-10
> a6=-5.19E-15

wobei als Glas B270 verwendet wurde.

### Ausführungsbeispiel 3

Zum Pressen eines diffraktiven optischen Elements (DOE) auf einer asphärischen Abbildungslinse wird eine Asphäre (Design gemäß Ausführungsbeispiel 2) verwendet. Die plane Seite wird mit einem Kunststoff beschichtet und anschließend mit einer DOE-Form durch den vorstehend beschriebenen Pressprozess strukturiert. Die plane Seite ist dabei dem Pressstempel mit dem DOE zugewandt. Aufgrund der Krümmung der Glasvorform ist ein zusätzlicher Pressweg von etwa 0.05 mm zu bewältigen. Es ergab sich, dass die DOEs ohne jegliche Unebenheiten aufgrund von Stickstoffeinschlüssen ausgebildet werden konnten. Die Phasenfunktion des DOE ergibt sich aus folgender Beziehung:

$$\varphi(r) = -6.75 r^2 + 0.001045 r^4$$

mit f [rad] und r: 0-35 mm.

Wie dem Fachmann beim Studium der vorstehenden Beschreibung ohne weiteres ersichtlich sein wird, betrifft ein weiterer Gesichtspunkt der vorliegenden Erfindung mit zumindest einer Abbildungsoptik, wie vorstehend beschrieben, zur beliebigen geeigneten Abbildung von Licht, insbesondere Lichtstrahlen, dienen. Einige Beispiele, auf die die vorliegende Anmeldung ausdrücklich nicht beschränkt sein soll, seien nachfolgend angegeben: digitale optische Projektion, analoge oder digitale Kameras, insbesondere Handy-Kameras und Camcorder, Mikroskopie-Geräte, Abbildungsvorrichtungen mit Linsen oder Linsen-Arrays, Homogenisatoren zum Homogenisieren von Lichtstrahlen einschließlich von Laserstrahlen, Abbildungsoptiken, Optische Abbildungsvorrichtungen im Automotive-Bereich, beispielsweise LED-Schweinwerfer, Head-up-displays, optische Mikroreflektoren, Laufwerke für optical storage zum optischen Lesen und/oder Schreiben von Daten auf ein optisches Aufzeichnungsmedium, einschließlich von blue-ray-disks.

Wie dem Fachmann aus der vorstehenden Beschreibung ohne weiteres ersichtlich sein wird, kann das erfindungsgemäße Verfahren gleichermaßen zur Heißformgebung von sphärischen und asphärischen Linsenkörpern sowie beliebigen anderen optisch wirksamen Strukturen verwendet werden. Das erfindungsgemäße Verfahren wird ganz besonders bevorzugt zur Heißformgebung von Zylinderlinsen, also Linsenkörpern, die in einer ersten Richtung gewölbt sind und in einer zweiten Richtung, die senkrecht zu der ersten Richtung ist, längserstreckt sind, oder zur Heißformgebung von diffraktiven optischen Elementen (diffractive optical elements; DOE) verwendet. Bevorzugt weist das optische Element nach der Heißformgebung mehrere diffraktive Strukturen oder mehrere refraktive Strukturen auf, die im Anschluss an die Heißformgebung auch vereinzelt werden können. Grundsätzlich können die mehreren optisch wirksamen Strukturen nach der Heißformgebung auch gemeinsam zur Formgebung oder Homogenisierung eines oder mehrerer Lichtstrahlen verwendet werden.

**Bezugszeichenliste**

1 Prägestempel
2 Rand des vorgeformten Bereichs oder Prägestempels
3 Konkave Vertiefung
4 Konvexer, erhabener Abschnitt
5 Rille
6 Spalt
8 Schräge
9 Mittelachse
10 Substrat
11 Zentraler Bereich

12 Umgeformter Bereich
14 Randbereich des Substrats
15 Grenzfläche Prägestempel-Substrat
16 Konvexer, erhabener Abschnitt
17 Konkave Vertiefung
18 Schräge
20 Optisches Element
21 Umgeformte konvexe Oberfläche des optischen Elements 20
22 Umgeformte plane Oberfläche des optischen Elements 20
23 Sägezahnförmige Erhebung von Beugungsgitter
24 Plane Oberfläche des optischen Elements 20
25 Umgeformte Mikrolinse
26 Wulst während des Heißformgebungsprozesses
30 Gegenstempel
40 Umzuformender Bereich des Substrats 10

**Patentansprüche**

1. Verfahren zum Ausbilden eines optischen Elements, mit den folgenden Schritten:

   Bereitstellen eines Formwerkzeugs (1), auf dessen Oberfläche eine Mehrzahl von Abformbereichen (2; 3; 4) zum Abformen von optischen Strukturen auf ein Substrat (10) ausgebildet sind;
   Bereitstellen des Substrats (10), wobei auf einer dem Formwerkzeug (1) zugewandten Oberfläche des Substrats (10) zumindest ein vorgeformter Bereich (16; 17) ausgebildet ist;
   Erwärmen des Substrats (10) auf eine Temperatur oberhalb einer Übergangstemperatur eines Materials des Substrats (10); und
   Gegeneinanderdrücken des Formwerkzeugs (1) und des Substrats (10), um ein optisches Element (20) mit einer Mehrzahl von optischen Strukturen (21; 23; 25) auszubilden, deren Form durch die Form des jeweils zugeordneten Abformbereichs (2; 3; 4) vorgegeben ist;

   **dadurch gekennzeichnet, dass** beim Gegeneinanderdrücken des Formwerkzeugs (1) und des Substrats (10) der jeweilige vorgeformte Bereich (16; 17) des Substrats (10) mit dem zugeordneten Abformbereich (2; 3; 4) oder mit dem Formwerkzeug (1) zunächst in einem zentralen Bereich (11) in Anlage gelangt, sodass sich ein Spalt (6), der zwischen einer Oberfläche des jeweiligen vorgeformten Bereichs (16; 17) und einer Oberfläche des zugeordneten Abformbereichs (2; 3; 4) oder des Formwerkzeugs (1) ausgebildet ist, von dem zentralen Bereich (11) zu einem Rand (2, 14) des jeweiligen vorgeformten Bereichs (16; 17) oder des Substrats (10) hin erstreckt und verbreitert, wobei das Substrat (10) und das Formwerkzeug (1) im Wesentlichen mit identischen Grundflächen bereitgestellt werden.

2. Verfahren nach Anspruch 1, wobei das Formwerkzeug und das Substrate (10) so bereitgestellt werden, dass die vorgeformten Bereiche (16; 17) des Substrats (10) und die zugeordneten Abformbereiche (2; 3; 4) des Formwerkzeugs (10) zwei jeweilige Halbräume festlegen und dass gilt:

$$r1 < r2 \;,$$

wobei r1 einem Krümmungsradius des jeweiligen Abformbereichs (2; 3; 4) entspricht, der positiv ist, wenn ein Krümmungsmittelpunkt der Oberfläche des jeweiligen Abformbereichs in demjenigen Halbraum liegt, in dem das Formwerkzeug (1) angeordnet ist, und der negativ ist, wenn der Krümmungsmittelpunkt der Oberfläche des jeweiligen Abformbereichs in dem anderen Halbraum liegt, und

r2 einem Krümmungsradius des zugeordneten vorgeformten Bereichs (16; 17) entspricht, der negativ ist, wenn ein Krümmungsmittelpunkt der Oberfläche des jeweiligen vorgeformten Bereichs in demjenigen Halbraum liegt, in dem das Substrat (10) angeordnet ist, und der positiv ist, wenn der Krümmungsmittelpunkt der Oberfläche des jeweiligen vorgeformten Bereichs in dem anderen Halbraum liegt, wobei

beim Gegeneinanderdrücken des Formwerkzeugs (1) und des Substrats (10) der jeweilige vorgeformte Bereich (16; 17) in Anlage zu einer Oberfläche des zugeordneten Abformbereichs (2; 3; 4) solange umgeformt wird, bis der Krümmungsradius (r2) des jeweiligen vorgeformten Bereichs (16; 17) einem Krümmungsradius des zugeordneten Abformbereichs (2; 3; 4) entspricht, um eine optische Struktur auszubilden.

3. Verfahren nach einem der vorhergehenden Ansprüche, bei dem das Formwerkzeug (1) und das Substrat (10) so bereitgestellt werden, dass sich der Spalt (6) von dem zentralen Bereich (11) zu einem Rand (2, 14) des jeweiligen vorgeformten Bereichs (16; 17) hin stetig verbreitert.

4. Verfahren nach einem der vorhergehenden Ansprüche, bei dem das Formwerkzeug (1) und das Substrat (10) so bereitgestellt werden, dass ein Gas aus dem Spalt (6) zu dem Rand (2, 14) des jeweiligen vorgeformten Bereichs (16; 17) hin entweichen kann.

5. Verfahren nach Anspruch 4, bei dem das Formwerkzeug (1) und das Substrat (10) so bereitgestellt werden, dass auf einer Oberfläche des Formwerkzeugs (1) und/oder des Substrats (10) außerhalb des jeweiligen Abformbereichs zumindest eine längliche Vertiefung (5) ausgebildet ist.

6. Verfahren nach Anspruch 5, bei dem das Formwerkzeug (1) und das Substrat (10) so bereitgestellt werden, dass eine jeweilige längliche Vertiefung (5) mit zumindest einem Spalt (6) zwischen der Oberfläche des vorgeformten Bereichs (16; 17) und der Oberfläche des zugeordneten Abformbereichs (2; 3; 4) kommuniziert.

7. Verfahren nach einem der vorhergehenden Ansprüche, bei dem das Formwerkzeug (1) und das Substrat (10) so bereitgestellt werden, dass sich der Spalt (6) in einer Richtung parallel zu einer Oberfläche des Formwerkzeugs (1) verbreitert.

8. Verfahren nach einem der vorhergehenden Ansprüche, bei dem das Formwerkzeug (1) und das Substrat (10) so bereitgestellt werden, dass sich der Spalt (6) in zwei zueinander orthogonalen Richtungen parallel zu einer Oberfläche des Formwerkzeugs (1) verbreitert.

9. Verfahren nach einem der vorhergehenden Ansprüche, bei dem das Formwerkzeug (1) und das Substrat (10) so bereitgestellt werden, dass der Spalt (6) als Ringspalt ausgebildet wird, der sich ausgehend von dem zentralen Bereich (11) radial auswärts verbreitert.

10. Verfahren nach einem der vorhergehenden Ansprüche, bei dem das Substrat (10) bei dem Ausbilden des optischen Elements (20) durch das Gegeneinanderdrücken des Formwerkzeugs (1) und des Substrats (10) quer zu einer Richtung einer Druckbeaufschlagung im Wesentlichen nicht verbreitert wird.

11. Verfahren nach einem der vorhergehenden Ansprüche, bei dem das Formwerkzeug (1) und das Substrat (10) so bereitgestellt werden, dass der zumindest eine Abformbereich (2; 3; 4) und der zugeordnete vorgeformte Bereich (16; 17) als erhabener Abschnitt oder als Vertiefung auf der Oberfläche des Formwerkzeugs (1) bzw. des Substrats (10) ausgebildet sind.

12. Verfahren nach Anspruch 11, bei dem das Formwerkzeug (1) und das Substrat (10) so bereitgestellt werden, dass der zumindest eine Abformbereich (2; 3; 4) und der zugeordnete vorgeformte Bereich (16; 17) als konvex gewölbter oder konkav gewölbter Abschnitt auf der Oberfläche des Formwerkzeugs (1) bzw. des Substrats (10) ausgebildet sind.

13. Verfahren nach einem der vorhergehenden Ansprüche, bei dem das Formwerkzeug (1) und das Substrat (10) so bereitgestellt werden, dass ein Gesamtvolumen der Abformbereiche (2; 3; 4) einem Volumen des zugeordneten vorgeformten Bereichs bzw. dem Gesamtvolumen der zugeordneten vorgeformten Bereiche (16; 17) entspricht.

14. Verfahren nach einem der vorhergehenden Ansprüche, bei dem nach dem Umformen des jeweiligen vorgeformten Bereichs (16; 17) zu der optischen Struktur an dem Rand (2, 14) eine lichte Weite zwischen einer Oberfläche des Substrats (10) und einer Oberfläche des Formwerkzeugs (1) verbleibt.

15. Verfahren nach einem der vorhergehenden Ansprüche, bei dem das Formwerkzeug (1) und das Substrat (10) so bereitgestellt werden, dass die optischen Strukturen des optischen Elements (20) diffraktiv und/oder refraktiv sind.

16. Verfahren nach einem der vorhergehenden Ansprüche, wobei zumindest ein vorgeformter Bereich (16; 17) sphärisch gekrümmt ist und zumindest ein Abformbereich (2; 3; 4) asphärisch gekrümmt oder als Freiformfläche ausgebildet ist, sodass zumindest ein vorgeformter Bereich (2; 3; 4) zu einer asphärisch gekrümmten oder als Freiformfläche ausgebildeten optischen Struktur umgeformt wird.

17. Verfahren nach einem der vorhergehenden Ansprüche, bei dem mehrere optische Elemente nach dem Umformen der Oberfläche des jeweiligen Formbereichs (16; 17) durch Trennen von Unterbereichen des Substrats (20), in welchen zumindest eine optische Struktur ausgebildet ist, vereinzelt werden.

18. Verfahren nach einem der vorhergehenden Ansprüche, bei dem das Formwerkzeug (1) und das Substrat (20) so bereitgestellt werden, dass für eine Formabweichung d zwischen dem Formwerkzeug (1) und dem Substrat (20) gilt:

$$d > 10 \ \mu m$$

beträgt und

$$d < (200 \ \mu m + D/10);$$

wobei D einen Durchmesser eines Abformbereichs (2; 3; 4) auf dem Formwerkzeug (1) in μm bezeichnet.

19. Vorrichtung zum Ausbilden eines optischen Elements bei einem Verfahren nach einem der vorhergehenden Ansprüche aus einem Substrat (20), mit zumindest einem Formwerkzeug (1) und einem Substrat (20), wobei

auf einer Oberfläche des Formwerkzeugs (1) eine Mehrzahl von Abformbereichen (2; 3; 4) zum Abformen von optischen Strukturen ausgebildet sind und

auf einer dem Formwerkzeug (1) zugewandten Oberfläche des Substrats (20) zumindest ein vorgeformter Bereich (16; 17) ausgebildet ist, um in Anlage zu einem zugeordneten Abformbereich (2; 3; 4) des Formwerkzeugs und unter Wärme- und Druckbeaufschlagung zu einer Mehrzahl von optischen Strukturen umgeformt zu werden,

wobei der zumindest eine vorgeformte Bereich (16; 17) des Substrats (10) und die Abformbereiche (2; 3; 4) auf der Oberfläche des Formwerkzeugs (1) so ausgebildet sind, dass beim Gegeneinanderdrücken des Formwerkzeugs (1) und des Substrats (10) der jeweilige vorgeformte Bereich (16; 17) des Substrats (10) mit dem zugeordneten Abformbereich (2; 3; 4) oder mit dem Formwerkzeug (1) zunächst in einem zentralen Bereich (11) in Anlage gelangt, sodass sich ein Spalt (6), der zwischen einer Oberfläche des jeweiligen vorgeformten Bereichs (16; 17) und einer Oberfläche des zugeordneten Abformbereichs (2; 3; 4) oder des Formwerkzeugs (1) ausgebildet ist, von dem zentralen Bereich (11) zu einem Rand (2, 14) des jeweiligen vorgeformten Bereichs (16; 17) oder des Substrats (10) hin erstreckt und verbreitert, wobei das Substrat (10) und das Formwerkzeug (1) im Wesentlichen identische Grundflächen aufweisen.

Fig. 1a

Fig. 1b

Fig. 1c

Fig. 2a

Fig. 2b

Fig. 2c

Fig. 3b

Fig. 3d

Fig. 3a

Fig. 3c

Fig. 4a

Fig. 4b

Fig. 4c

Fig. 5

Fig. 6

Fig. 7

Fig. 8

**Europäisches Patentamt**

# EUROPÄISCHER RECHERCHENBERICHT

**Nummer der Anmeldung**

EP 05 10 3473

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 368 524 B1 (FUJITA HIROAKI ET AL) 9. April 2002 (2002-04-09) | 1-5, 7-16,18, 19 | C03B11/08 B29C43/02 B29D11/00 G02B5/18 |
| Y | * Spalte 1, Zeile 12 - Zeile 25; Abbildungen 1-3 * * Spalte 1, Zeile 55 - Spalte 2, Zeile 16 * * Spalte 3, Zeile 5 - Spalte 4, Zeile 24 * * Spalte 4, Zeile 41 - Zeile 47 * ----- | 6,17 | |
| Y | PATENT ABSTRACTS OF JAPAN Bd. 2000, Nr. 05, 14. September 2000 (2000-09-14) & JP 2000 053428 A (SONY CORP), 22. Februar 2000 (2000-02-22) * Zusammenfassung * ----- | 6 | |
| A | US 5 436 764 A (UMETANI ET AL) 25. Juli 1995 (1995-07-25) * Ansprüche 9,11-14; Abbildung 5 * ----- | 10 | |
| Y | US 6 305 194 B1 (BUDINSKI MICHAEL K ET AL) 23. Oktober 2001 (2001-10-23) * Ansprüche 1,4 * ----- | 17 | RECHERCHIERTE SACHGEBIETE (Int.Cl.7) C03B B29C B29D G02B |
| A | US 6 070 436 A (HIROTA ET AL) 6. Juni 2000 (2000-06-06) * Spalte 4, Zeile 20 - Zeile 29 * ----- | 1 | |
| A | PATENT ABSTRACTS OF JAPAN Bd. 016, Nr. 509 (C-0997), 21. Oktober 1992 (1992-10-21) & JP 04 187533 A (KYOCERA CORP), 6. Juli 1992 (1992-07-06) * Zusammenfassung * ----- | 1 | |

Der vorliegende Recherchenbericht wurde für alle Patentansprüche erstellt

| Recherchenort | Abschlußdatum der Recherche | Prüfer |
|---|---|---|
| München | 7. Juli 2005 | Deckwerth, M |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 05 10 3473

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-07-2005

| Im Recherchenbericht angeführtes Patentdokument | | Datum der Veröffentlichung | Mitglied(er) der Patentfamilie | | Datum der Veröffentlichung |
|---|---|---|---|---|---|
| US 6368524 | B1 | 09-04-2002 | JP | 2001278629 A | 10-10-2001 |
| JP 2000053428 | A | 22-02-2000 | KEINE | | |
| US 5436764 | A | 25-07-1995 | JP | 3147481 B2 | 19-03-2001 |
| | | | JP | 5297210 A | 12-11-1993 |
| | | | DE | 69311840 D1 | 07-08-1997 |
| | | | DE | 69311840 T2 | 27-11-1997 |
| | | | EP | 0567896 A1 | 03-11-1993 |
| US 6305194 | B1 | 23-10-2001 | EP | 1069082 A2 | 17-01-2001 |
| | | | JP | 2001048554 A | 20-02-2001 |
| US 6070436 | A | 06-06-2000 | JP | 3587499 B2 | 10-11-2004 |
| | | | JP | 11035333 A | 09-02-1999 |
| | | | US | 5987922 A | 23-11-1999 |
| JP 04187533 | A | 06-07-1992 | KEINE | | |

EPO FORM P0461

Für nähere Einzelheiten zu diesem Anhang : siehe Amtsblatt des Europäischen Patentamts, Nr.12/82